# FASCICULE DE BREVET EUROPEEN

(11) **EP 2 790 170 B1**
(45) Date de publication et mention de la délivrance du brevet: **22.07.2015**
(21) Numéro de dépôt: 14001191.7
(22) Date de dépôt: 31.03.2014
(51) Int. Cl.: G09B 9/46

(54) **Procédé d'entraînement d'un rotor principal de giravion dans le cadre d'une simulation d'un cas de panne de l'un des moteurs du giravion**
Verfahren zur Ansteuerung eines Drehflügelflugzeughauptrotors für ein OEI-Flugverfahrenstraining
Helicopter main rotor powering procedure during one engine inoperative simulation

(30) Priorité: 09.04.2013 FR 1300811
(43) Date de publication de la demande: 15.10.2014
(73) Titulaire: Airbus Helicopters, 13725 Marignane Cedex (FR)
(72) Inventeur: Dumur, Guillaume, F-13300 Salon DE Provence (FR); Rossotto, Régis, F-13012 Marseille (FR); Vieira, Hilario, F-13130 Berre L'Etang (FR)
(74) Mandataire: GPI & Associés

(56) Documents cités:
- US-A- 3 930 366
- US-A- 5 873 546
- US-A1- 2009 186 320

## Description

La présente invention est du domaine des simulations effectuées à bord d'un giravion pour l'entraînement d'un pilote. La présente invention relève plus particulièrement d'une telle simulation relative à l'entraînement d'un pilote à un cas de panne de l'un des moteurs d'un giravion équipé de plusieurs moteurs, giravion bimoteur notamment.

Les giravions sont des aéronefs à voilure(s) tournante(s) dont au moins la sustentation est procurée par au moins un rotor principal à axe sensiblement vertical. Dans le cadre spécifique d'un hélicoptère, le rotor principal procure non seulement la sustentation du giravion, mais aussi sa propulsion et/ou son guidage en tangage et en roulis. Les giravions sont aussi équipés d'un dispositif anti-couple procurant leur guidage en lacet, tel qu'au moins un rotor annexe à axe sensiblement horizontal. Un tel rotor annexe est par exemple un rotor arrière ou une hélice propulsive dans le cadre d'un hélicoptère à vitesses élevées de propulsion.

Le ou les rotors sont entraînés en rotation par un groupe de motorisation équipant le giravion. Il est fréquent qu'un tel groupe de motorisation comporte au moins deux moteurs, turboréacteurs notamment. Les moteurs sont en prise sur une chaîne de transmission de puissance interposée entre le groupe de motorisation et les organes du giravion consommateurs de puissance mécanique, dont notamment le ou les rotors.

Typiquement, le fonctionnement des organes moteurs est placé sous dépendance d'une unité de régulation. La régulation du fonctionnement courant des organes moteurs est opérée par l'unité de régulation conformément à un mode nominal communément désigné par mode AEO (d'après l'acronyme anglais All Engine Opérative).

Le problème d'un cas de panne de l'un des moteurs du groupe de motorisation est à prendre en compte dans le domaine de l'aéronautique. Dans un tel cas de panne, le nombre de moteurs disponibles pour fournir au giravion la puissance mécanique nécessaire est réduit.

C'est pourquoi il a été établi des modes dits OEI (d'après l'acronyme anglais One Engine Inoperative) de régulation du fonctionnement des moteurs en cas de panne de l'un d'entre eux. En cas de panne d'un moteur, au moins un autre moteur disponible fonctionnant en mode OEI fournit une puissance de consigne pendant une durée prédéfinie, pour permettre temporairement au giravion de progresser en vol malgré l'indisponibilité de l'un des moteurs.

Divers modes OEI sont habituellement établis pour diverses phases de vol du giravion, tels que par exemple les modes OEI courants suivants :
-) mode OEI de très courte durée, selon lequel la puissance de consigne est fournie pour une durée brève de l'ordre de 30 secondes en phase de décollage du giravion.
-) mode OEI de courte durée, selon lequel la puissance de consigne est fournie sur une durée courte de l'ordre de 2 minutes à 3 minutes en phase de décollage avancé du giravion.
-) mode OEI de longue durée, selon lequel la puissance de consigne est fournie sur une durée potentiellement illimitée.

L'aptitude des moteurs à fournir isolément la puissance de consigne en mode OEI implique leur surdimensionnement, selon la structure du giravion et selon les capacités de fonctionnement des moteurs. On relèvera qu'il est économiquement utile de restreindre un tel surdimensionnement, dont l'intérêt est limité à un cas exceptionnel de panne de l'un des moteurs.

Il est par ailleurs à considérer que le pilotage d'un giravion en cas de panne d'un moteur est délicat et nécessite un savoir-faire spécifique du pilote. C'est pourquoi, il est opportun d'entraîner les pilotes à un tel cas de panne.

L'entraînement du pilote est fréquemment réalisé par simulation effectuée en vol réel à bord d'un giravion, sous contraintes de conditions de vol favorables. A cet effet, un cas de panne de l'un des moteurs est simulé sans toutefois rendre inefficients les moteurs, pour maintenir disponibles tous les moteurs et permettre leur exploitation individuelle en cas de panne réelle de l'un d'entre eux.

Il est préférable d'éviter dans le cadre d'une telle simulation, un fonctionnement individuel des moteurs selon les contraintes imposées par les modes OEI. En effet, le fonctionnement d'un moteur en mode OEI est délétère et il est utile de le préserver pour éviter des opérations de maintenance coûteuses. C'est pourquoi dans le cadre d'une dite simulation, il est fréquent de modifier les limites imposées par les modes OEI et/ou de modifier la valeur des critères pris en compte pour définir ces limites, telle que la masse du giravion.

Il est connu un mode d'entraînement dit « monomoteur » selon lequel un premier moteur est exploité pour fournir la puissance de consigne. Au moins un deuxième moteur est maintenu en fonctionnement et en prise sur la chaîne de transmission de puissance, mais de manière désynchronisée de sorte que son exploitation soit réservée au maintien d'un entraînement du rotor principal à un seuil minimal de vitesse de rotation ne devant pas être franchi.

En cas de besoin et notamment en cas d'incapacité du premier moteur à fournir la puissance mécanique nécessaire à l'entraînement du rotor principal, le deuxième moteur est disponible pour fournir de la puissance en complément et/ou en substitution d'une exploitation du premier moteur.

Une telle approche n'est guère satisfaisante au regard de la rapidité d'exploitation du deuxième moteur en cas d'urgence, tel qu'en cas de panne réelle du premier moteur.

En effet, la désynchronisation du deuxième moteur induit un temps de réponse insatisfaisant pour procurer sa mise en synchronisation avec la chaîne de transmission de puissance, une telle synchronisation étant nécessaire à un entraînement du rotor principal pour permettre au giravion de poursuivre sa progression sous conditions de vol favorable. En outre tel que précédemment mentionné, il n'est pas souhaitable dans le cadre d'une simulation de solliciter un moteur aux limites imposées par un mode OEI pour éviter sa dégradation.

Ainsi, il a été proposé une autre approche selon laquelle tous les moteurs sont exploités simultanément pour simuler une panne de l'un des moteurs. Dans le cadre d'une exécution d'un mode OEI simulé faisant l'objet de l'entraînement, la puissance de consigne à fournir est équitablement répartie entre tous les moteurs maintenus synchrones avec la chaîne de transmission de puissance. Dans ce cas, chacun des moteurs fournit une puissance mécanique correspondante à la puissance de consigne divisée par le nombre de moteurs.

Cette autre approche présente l'avantage de maintenir chacun des moteurs en fonctionnement et en prise synchrone sur la chaîne de transmission de puissance. En cas de panne réelle de l'un des moteurs, la réactivité d'un autre moteur pour fournir la totalité de la puissance nécessaire est satisfaisante. De telles modalités de simulation sont préférables pour préserver les moteurs et pour permettre un entraînement d'un pilote en conditions de vol favorables.

Par ailleurs, des moyens d'affichage indiquent au pilote la vitesse de rotation du rotor principal pour lui permettre de maintenir son entraînement conformément à une vitesse de rotation de consigne.

En cas d'une baisse de la vitesse de rotation du rotor principal, le pilote opère une variation du pas collectif des pales du rotor principal pour réduire la charge qu'il supporte et rétablir son entraînement conformément à la vitesse de rotation de consigne.

Pour apprécier les approches connues relatives à diverses simulations en vol d'une panne d'un moteur d'un giravion équipé de plusieurs moteurs, on pourra par exemple se reporter aux documents US2005234689 (PRATT & WHITNEY CANADA) et US5873546 (SIKORSKY AIRCRAFT CORP.). Plus spécifiquement concernant la fourniture d'une puissance de consigne conjointement par plusieurs moteurs dans le cadre d'une simulation en vol d'une panne de l'un des moteurs, on pourra se reporter aux documents US4831567 (PRATT & WHITNEY CANADA) et US6917908 (BELL HELICOPTER TEXTRON Inc et al.).

Il est aussi à considérer une potentielle chute de vitesse de rotation du rotor principal provoquée par une incapacité de l'élève à gérer une simulation brutale d'une panne de l'un des moteurs ou provoquée sous l'effet de certaines manoeuvres du giravion effectuées par le pilote en phase d'entraînement. A titre indicatif, il est communément considéré qu'une telle chute de vitesse de rotation est de l'ordre de 95% de la vitesse de rotation de consigne et/ou par analogie est de l'ordre de 5% par tour de rotation du rotor principal.

Dans un tel cas de vol, un dispositif de sécurité interrompt spontanément la simulation en vol et le régime de chacun des moteurs est rétabli à sa puissance nominale en étant régulés selon le mode nominal de fonctionnement AOE. On pourra à ce propos se reporter aux documents US2009186320 (RUCCI J. et al.), US 3 930 366 (NELSON R.E.), US5948023 (SIKORSKY AIRCRAFT CORP.) voire aussi au document US 5 873 546 (EVANS C.W. et al.).

Cependant, il est constaté qu'une telle solution tend à générer des phénomènes d'« à coups » en lacet avec en corollaire une difficulté pour l'élève inexpérimenté de piloter le giravion soumis à de tels « à coups ». Il est plus particulièrement constaté que l'interruption de la simulation est génératrice d'un brusque apport de puissance mécanique par le groupe de motorisation, ce qui tend à déstabiliser la progression dugiravion en lacet.

Le pilote confronté à une interruption inopinée de la simulation peut être surpris et ne pas être en mesure de stabiliser rapidement le giravion. Par ailleurs, le phénomène d'« à-coups » est à éviter pour préserver le giravion. Il est en outre à considérer qu'une telle situation de déstabilisation du giravion est provoquée en conséquence d'un cas de vol fictif induit par l'interruption inopinée de la simulation, à l'encontre de l'intérêt pédagogique de l'entraînement du pilote propre à une panne d'un moteur.

Toujours au regard de l'intérêt pédagogique, il n'est pas opportun que l'élève soit confronté brutalement à un sentiment d'échec.

Par ailleurs, une telle perte de stabilité du giravion en lacet est dépendante des valeurs définies par les modes OEI et de l'inertie du rotor arrière. In est en conséquence habituellement nécessaire de définir des modalités spécifiques du fonctionnement des moteurs en mode d'entraînement d'un pilote qui sont spécifiques aux structures propres de giravions de familles respectives. Il apparaît en conséquence utile de définir des modalités de mise en oeuvre des modes OEI dans le cadre d'une simulation de panne de l'un des moteurs, qui soient exploitables pour des giravions de quelconques familles.

En conclusion, il apparaît utile de perfectionner les modalités mises en oeuvre pour l'entraînement d'un pilote à un cas de panne d'un moteur d'un giravion équipé de plusieurs moteurs, en prenant au mieux en compte l'ensemble des contraintes et les besoins et/ou les avantages précédemment énoncés.

La présente invention a pour objet un procédé d'entraînement en rotation d'au moins un rotor principal d'un giravion équipé d'un groupe de motorisation comprenant une pluralité de moteurs dans le cadre d'une mise en oeuvre d'un mode de simulation en vol d'un cas de panne de l'un des moteurs du giravion, giravion bimoteur notamment, pour entraîner un pilote du giravion à un tel cas de panne.

Le but de la présente invention est de proposer un tel procédé prenant notamment en compte les besoins et/ou les avantages recherchés précédemment énoncés, dans le cadre des contraintes techniques et économiques mentionnées.

Conformément à la démarche de la présente invention, il est fait le choix de mettre en oeuvre un procédé selon la revendication 1, du type conforme à la mise en oeuvre d'un mode de simulation en vol d'un cas de panne de l'un des moteurs du giravion pour entraîner un pilote du giravion à un tel cas de panne.

Conformément à la mise en oeuvre du mode de simulation, au moins deux moteurs du groupe de motorisation du giravion fournissent conjointement une puissance procurant un entraînement du dit au moins un rotor principal à une vitesse de rotation de consigne. Ladite puissance est choisie équitablement répartie entre les moteurs maintenus dans leur ensemble en prise synchrone sur une chaîne de transmission de puissance interposée entre le groupe de motorisation et le rotor principal.

Selon une application du mode de simulation, lesdits au moins deux moteurs sont chacun mis en oeuvre sous dépendance d'une première consigne sélectionnée parmi plusieurs diverses premières consignes prédéfinies. Chacune desdites premières consignes est liée à des deuxièmes consignes respectives définissant chacune pour une période donnée une puissance que les moteurs sont autorisés à fournir hors mode de simulation en cas de panne réelle d'un moteur. La valeur de chacune des premières consignes correspond à la valeur de la deuxième consigne à laquelle elle est liée répartie entre les moteurs exploités pour la mise en oeuvre du dit mode de simulation.

Plus particulièrement et en d'autres termes, selon un tel mode de simulation dans lequel les moteurs dans leur ensemble sont classiquement maintenus en prise synchrone sur ladite chaîne de transmission de puissance, les dits au moins deux moteurs sont chacun mis en oeuvre sous dépendance d'une première consigne. Ladite première consigne est prédéfinie selon la valeur d'une deuxième consigne sélectionnée par un formateur parmi plusieurs deuxièmes consignes définissant chacune pour une période donnée une puissance que les moteurs sont autorisés à fournir hors mode de simulation en cas de panne réelle d'un moteur. La valeur de la première consigne correspond à la valeur de la deuxième consigne la définissant répartie équitablement entre les moteurs maintenus dans leur ensemble en prise synchrone sur ladite chaîne de transmission de puissance pour entraîner en rotation le rotor principal en mode de simulation.

Il est évidemment compris que hors mode de simulation et en cas de panne réelle de l'un des moteurs, au moins un autre moteur procure l'entraînement en rotation du rotor principal conformément à l'application de la deuxième consigne.

Toujours selon une application du mode de simulation, une vitesse de rotation du rotor principal détectée comme inférieure à un seuil de vitesse de rotation prédéterminé provoque spontanément la mise en oeuvre d'une opération d'apport de puissance fournie par les moteurs dans la limite imposée par une troisième consigne.

Conformément à un tel choix, il est plus particulièrement recherché par la présente invention d'améliorer les conditions de vol favorables du giravion progressant en mode de simulation, notamment vis-à-vis d'une déstabilisation du giravion en lacet en cas de chute de la vitesse de rotation du rotor principal.

Il est aussi plus particulièrement recherché par la présente invention de définir des modes de régulation des moteurs qui soient en mode de simulation applicables à des giravions de structures générales et de capacité motrices diverses.

Il est encore plus particulièrement recherché par la présente invention d'améliorer l'apport pédagogique fourni au pilote au cours de son entraînement à une telle simulation.

Selon la présente invention, un tel procédé est principalement reconnaissable en ce que ladite opération d'apport de puissance est mise en oeuvre par un maintien actif du mode de simulation et par génération d'une commande de régulation provoquant une augmentation progressive contrôlée de la puissance fournie par les moteurs en autorisant un franchissement de la limite de puissance imposée par la première consigne.

Il est évidemment compris que ladite commande de régulation est générée par une unité de régulation du fonctionnement des organes moteurs, selon une fonction de régulation prédéfinie procurant un contrôle prédéterminé de la variation de la puissance fournie par les moteurs entre la première consigne et la troisième consigne. Le dit contrôle prédéterminé est défini en fonction de la variation de puissance à fournir de sorte que l'apport de puissance procuré depuis la première consigne vers la troisième consigne ne soit pas brutalement opéré tel que selon l'art antérieur.

Il est rappelé que selon l'art antérieur, l'apport de puissance procuré est opéré rapidement depuis la première consigne jusqu'à parvenir à une troisième consigne dont la valeur est définie par un mode AEO de régulation du fonctionnement des moteurs fournissant une pleine puissance d'entraînement en rotation du rotor principal par le groupe de motorisation hors mode de simulation et hors cas de panne moteur.

En cas d'une baisse de la vitesse de rotation du rotor principal sous le seuil de vitesse de rotation prédéterminé, l'apport progressif de puissance par les moteurs est juste suffisant pour stopper la chute du nombre de tours par minute du rotor principal, voire pour favoriser une accélération du rotor principal. Le pilote peut poursuivre son entraînement sous conditions de vol favorables, en étant assisté par une régulation d'un apport progressif de puissance mais en contrôlant les besoins en puissance du rotor principal par une manoeuvre du pas collectif des pales.

Ladite augmentation progressive de la puissance fournie par les moteurs depuis la première consigne vers la troisième consigne peut être avantageusement interrompue à une puissance courante fournie par les moteurs procurant un entraînement du rotor principal à une vitesse de rotation supérieure ou égale au seuil de vitesse de rotation prédéterminé. L'entraînement du rotor principal à une vitesse de rotation supérieure au seuil de vitesse de rotation prédéterminé est avantageusement procuré en conséquence d'une manoeuvre du pas collectif des pales du rotor principal opérée par le pilote poursuivant son entraînement en mode de simulation.

Il est en cela compris que ledit franchissement autorisé de la première consigne est potentiellement interrompu sans que la puissance fournie par les moteurs soit nécessairement parvenue à une valeur correspondante à la troisième consigne et/ou à une valeur nominale de puissance des moteurs.

Le pilote n'est pas brutalement soumis à un sentiment d'échec et des phénomènes « d'à coups » en lacet sont évités, tel que dans le cas d'une interruption brutale du mode de simulation en cas d'une détection de la vitesse de rotation du rotor principal inférieure au seuil de vitesse de rotation prédéterminé.

Les modalités proposées pour éviter une mise en rotation du rotor principal à une vitesse de rotation inférieure au seuil de vitesse de rotation prédéterminé, sont indépendantes des définitions préalables des valeurs de la première consigne, de la deuxième consigne et de la troisième consigne, et sont indépendantes de la définition préalable de la masse propre du giravion. Il en ressort que les modalités proposées sont transposables en elles-mêmes pour des giravions de quelconques structures respectives.

Ladite puissance courante est avantageusement maintenue après ladite interruption d'augmentation progressive en puissance.

De telles dispositions sont notamment utiles pour des simulations opérées dans le cadre d'une procédure d'atterrissage ou d'un franchissement d'obstacle, afin de maintenir des conditions de vol favorables à l'entraînement du pilote.

Plus particulièrement, pour une quelconque dite première consigne mise en oeuvre en mode de simulation, la valeur de la troisième consigne est notamment la valeur de l'une quelconque des deuxièmes consignes.

De préférence pour une quelconque dite première consigne mise en oeuvre en mode de simulation, la valeur de la troisième consigne est la valeur de la deuxième consigne définissant la valeur de la première consigne mise en oeuvre en mode de simulation.

Ladite augmentation progressive de la puissance est potentiellement provoquée suivant une variation linéaire de puissance.

Selon une variante, ladite augmentation progressive de la puissance est potentiellement provoquée suivant une variation progressive de l'augmentation de puissance. Il est compris qu'une telle variation progressive est opérée suivant une fonction non-linéaire de variation de l'augmentation progressive de la puissance fournie par les moteurs.

Selon une forme de réalisation, ladite augmentation progressive en puissance est provoquée par l'émission d'une première requête relative à une augmentation progressive de la première consigne jusqu'à obtention d'une vitesse de rotation du dit au moins un rotor principal au plus égale à la vitesse de rotation de consigne.

Selon une autre forme de réalisation, ladite augmentation progressive en puissance est provoquée par l'émission d'une deuxième requête relative à une vitesse de rotation prédéfinie d'entraînement du rotor principal, la valeur de la vitesse de rotation prédéfinie étant inférieure à la valeur de la vitesse de rotation de consigne et étant supérieure à la valeur du seuil de vitesse de rotation prédéterminé.

Ces dispositions sont telles que la progressivité obtenue de l'apport en puissance est dépendante du choix de la valeur de ladite vitesse de rotation prédéfinie, qui détermine le surplus de puissance à fournir par rapport à la première consigne. La vitesse de rotation prédéfinie est choisie pour requérir un tel surplus de puissance propre à générer ladite augmentation progressive en puissance.

Par ailleurs, le procédé comprend de préférence une opération d'affichage de diverses informations. Parmi ces informations affichées, il est avantageusement proposé d'afficher une première information relative à la vitesse de rotation courante d'entraînement du rotor principal, et d'afficher une deuxième information relative à un franchissement de la valeur de la première consigne.

Des exemples de réalisation de la présente invention vont être décrits en relation avec les figures des planches annexées, dans lesquelles :
- la fig.1 est un diagramme illustrant les contraintes imposées par l'application d'un mode de simulation conforme à la mise en oeuvre d'un procédé d'entraînement en rotation d'un rotor principal d'un giravion selon un exemple de réalisation de la présente invention.
- la fig.2 est un diagramme illustrant les contraintes imposées par l'application d'un mode de simulation conforme à la mise en oeuvre d'un procédé d'entraînement en rotation d'un rotor principal d'un giravion selon un autre exemple de réalisation de la présente invention.

Sur les figures, des diagrammes illustrent des modalités de mise en oeuvre d'un moteur de giravion exploité pour entraîner en rotation au moins un rotor principal équipant le giravion, dans le cadre de l'exécution d'un mode de simulation en vol d'un cas de panne de l'un des moteurs équipant le giravion.

Sur les exemples de réalisation illustrés, il est considéré un giravion équipé de deux moteurs conjointement exploités pour l'entraînement du rotor principal. Les modalités illustrées sur les figures d'application du mode de simulation, sont transposables pour un quelconque giravion selon sa structure et le nombre de moteurs dont il est équipé.

Les moteurs sont conjointement en prise synchrone sur une chaîne de transmission mécanique reliant les moteurs au rotor principal. Les moteurs du giravion sont aptes à être exploités individuellement en cas de panne réelle de l'autre moteur, conformément à l'application de consignes prédéfinies dites deuxièmes consignes OEI.

De telles deuxièmes consignes OEI sont relatives à une puissance que chaque moteur est apte à fournir pendant une période donnée. En cas de panne réelle de l'un des moteurs, l'autre moteur est exploité pour entraîner seul à puissance donnée le rotor principal pendant une période prédéterminée, conformément à l'application d'une deuxième consigne OEI.

En mode de simulation, les deux moteurs en fonctionnement sont maintenus en prise synchrone pour l'entraînement du rotor principal, conformément à l'application d'une première consigne OEI/2 commune à chacun des moteurs. La valeur d'une telle première consigne OEI/2 correspond à la valeur d'une deuxième consigne OEI répartie entre les moteurs exploités pour la mise en oeuvre du mode de simulation. Dans le cas d'exemple d'application de l'invention à un giravion bimoteur, la valeur de la première consigne OEI/2 correspond à la valeur de la deuxième consigne OEI divisée par le nombre de moteurs équipant le giravion.

Pour une première consigne OEI/2 donnée, la vitesse de rotation du rotor principal ne peut être inférieure à un seuil S de vitesse de rotation prédéterminé selon le couple supporté par le rotor principal. En cas d'un entraînement du rotor principal à une vitesse de rotation courante NR inférieure ou égale au dit seuil S, une augmentation progressive A en puissance est opérée tout en maintenant actif le mode de simulation.

Plus particulièrement dans le cas où la vitesse de rotation courante NR du rotor principal est détectée inférieure ou égale au seuil S de vitesse de rotation prédéterminé, une requête est émise pour opérer l'augmentation progressive A en puissance procurant au moins le maintien sinon un accroissement progressif de la vitesse de rotation courante NR du rotor principal par rapport au seuil S de vitesse de rotation prédéterminé.

L'augmentation progressive A en puissance est procurée individuellement par chacun des moteurs, conformément à une autorisation de franchissement de la limite de puissance imposée par la première consigne OEI/2. Le pilote en cours de formation peut continuer à piloter le giravion en opérant des commandes de vol modifiant le pas des pales du rotor principal, et en conséquence en modifiant la portance du giravion jusqu'à obtenir des conditions de vol favorables.

L'augmentation progressive A en puissance est interrompue lorsque les moteurs fournissent conjointement une puissance courante apte à entraîner le rotor principal sous conditions de vol favorables, à une vitesse de rotation courante NR supérieure au seuil S selon le couple supporté par le rotor principal. La puissance courante fournie conjointement par les moteurs est de préférence maintenue après interruption de l'augmentation progressive A en puissance.

Sur les figures, les consignes OEI et OEI/2 sont indiquées pour des vitesses de rotation prédéfinies d'entraînement du rotor principal. La deuxième consigne OEI est indiquée conformément à une vitesse de rotation de consigne V1 d'entraînement du rotor principal. La ou les premières consignes OEI/2 sont au moins indiquées sur les figures pour un dit seuil S de vitesse de rotation.

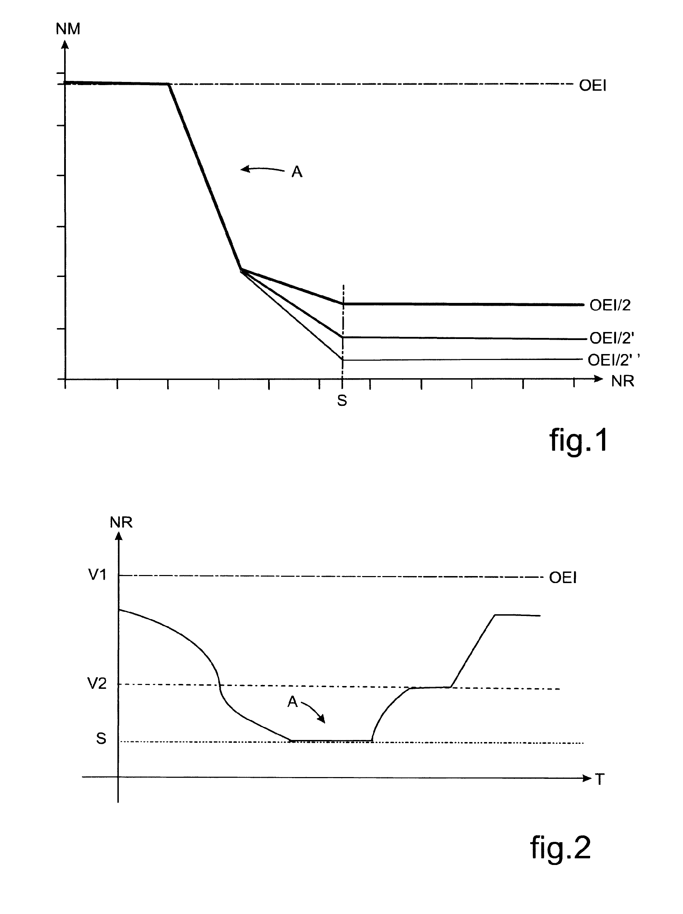

Sur la fig.1, l'application des consignes OEI et OEI/2 est illustrée dans un repère représentant l'évolution de la puissance fournie par l'un des moteurs du giravion en fonction de la vitesse de rotation courante NR du rotor principal et en fonction du couple NM supporté par le rotor principal.

Plusieurs premières consignes OEI/2, OEI/2' et OEI/2" sont illustrées, considérant qu'il est communément admis qu'une seule première consigne préalablement sélectionnée est prise en considération pour réguler le fonctionnement du moteur pour un mode de simulation donné choisi par l'instructeur. La valeur de chacune des premières consignes OEI/2, OEI/2' et OEI/2" illustrées correspond à la valeur de deuxièmes consignes auxquelles les premières consignes sont respectivement liées et qui leur sont propres, tel qu'habituellement dans le domaine des giravions.

L'augmentation progressive A en puissance est opérée lorsque la vitesse de rotation courante NR du rotor principal est détectée inférieure ou égale au dit seuil S. Une première requête est émise pour augmenter progressivement la valeur de la première consigne OEI/2 jusqu'à l'obtention d'une vitesse de rotation courante NR du rotor principal potentiellement inférieure mais de préférence égale à la vitesse de rotation de consigne V1, selon l'aptitude du pilote en cours de formation à commander une variation du pas collectif des pales du rotor principal.

En fonction des commandes de vol opérées par le pilote, l'augmentation progressive A en puissance est interrompue lorsque la vitesse de rotation courante NR du rotor principal procure une portance favorable du giravion. Une telle portance favorable est communément détectée par l'instrumentation de bord du giravion, telle qu'à partir d'une détection de la variation de la vitesse verticale du giravion.

Sur la fig.2, l'application d'une première consigne OEI/2 est illustrée dans un repère représentant l'évolution de la vitesse de rotation courante NR du rotor principal en fonction du temps T.

L'augmentation progressive A en puissance est opérée par application d'une deuxième requête relative à une vitesse de rotation prédéfinie V2 d'entraînement du rotor principal, provoquant un accroissement progressif de la vitesse de rotation courante NR du rotor principal.

L'augmentation progressive A en puissance est interrompue lorsque la vitesse de rotation courante NR du rotor principal atteint la vitesse de rotation prédéfinie V2. La vitesse de rotation prédéfinie V2 est préalablement déterminée apte à procurer une portance favorable du giravion pour un couple supporté par le rotor principal identifié par rapport à la valeur de la première consigne.

Il est compris qu'en fonction des commandes de vol opérées ensuite par le pilote, la vitesse de rotation courante NR du rotor principal peut augmenter et être indifféremment supérieure à la vitesse de rotation prédéfinie V2 relative à la deuxième requête.

## Revendications

1. Procédé d'entraînement en rotation d'au moins un rotor principal d'un giravion équipé d'un groupe de motorisation comprenant une pluralité de moteurs, le procédé mettant en oeuvre un mode de simulation en vol d'un cas de panne de l'un des moteurs du giravion pour entraîner un pilote du giravion à un tel cas de panne, selon lequel mode de simulation :
- au moins deux moteurs fournissent conjointement une puissance procurant un entraînement du rotor principal à une vitesse de rotation de consigne (V1), ladite puissance étant équitablement répartie entre les moteurs maintenus dans leur ensemble en prise synchrone sur une chaîne de transmission de puissance interposée entre le groupe de motorisation et le rotor principal,
- les dits au moins deux moteurs étant chacun mis en oeuvre sous dépendance d'une première consigne (OEI/2) prédéfinie selon la valeur d'une deuxième consigne (OEI) sélectionnée par un formateur parmi plusieurs deuxièmes consignes (OEI) définissant chacune pour une période donnée une puissance que les moteurs sont autorisés à fournir hors mode de simulation en cas de panne réelle d'un moteur, la valeur de la première consigne (OEI/2) correspondant à la valeur de la deuxième consigne (OEI) la définissant répartie équitablement entre les moteurs maintenus dans leur ensemble en prise synchrone sur ladite chaîne de transmission de puissance pour entraîner en rotation le rotor principal en mode de simulation,
- une vitesse de rotation courante (NR) du rotor principal détectée comme inférieure à un seuil (S) de vitesse de rotation prédéterminé, provoquant spontanément la mise en oeuvre d'une opération d'apport de puissance fournie par les moteurs dans la limite imposée par une troisième consigne,
**caractérisé en ce que** ladite opération d'apport de puissance est mise en oeuvre par un maintien actif du mode de simulation et par génération d'une commande de régulation provoquant une augmentation progressive (A) contrôlée de la puissance fournie par les moteurs en autorisant un franchissement de la limite imposée par la première consigne (OEI/2), ladite augmentation progressive (A) de la puissance étant interrompue à une puissance courante fournie par les moteurs procurant un entraînement du rotor principal à une vitesse de rotation supérieure ou égale au seuil (S) de vitesse de rotation prédéterminé en conséquence d'une manoeuvre du pas collectif des pales du rotor principal opérée par le pilote poursuivant son entraînement en mode de simulation.

2. Procédé selon la revendication 1,
**caractérisé en ce que**, pour une quelconque dite première consigne (OEI/2) mise en oeuvre en mode de simulation, la valeur de la troisième consigne est la valeur de l'une quelconque des deuxièmes consignes (OEI).

3. Procédé selon la revendication 2,
**caractérisé en ce que**, pour une quelconque dite première consigne (OEI/2) mise en oeuvre en mode de simulation, la valeur de la troisième consigne est la valeur de la deuxième consigne (OEI) définissant la valeur de la première consigne (OEI/2) mise en oeuvre en mode de simulation.

4. Procédé selon la revendication 3,
**caractérisé en ce que** ladite puissance courante est maintenue après ladite interruption d'augmentation progressive (A) en puissance.

5. Procédé selon l'une quelconque des revendications 1 à 4,
**caractérisé en ce que** ladite augmentation progressive (A) de la puissance est provoquée suivant une variation linéaire de puissance.

6. Procédé selon l'une quelconque des revendications 1 à 4,
**caractérisé en ce que** ladite augmentation progressive (A) de la puissance est provoquée suivant une variation progressive de l'augmentation de puissance.

7. Procédé selon l'une quelconque des revendications 1 à 6,
**caractérisé en ce que** ladite augmentation progressive (A) en puissance est provoquée par l'émission d'une première requête relative à une augmentation progressive de la première consigne (OEI/2) jusqu'à obtention d'une vitesse de rotation du dit au moins un rotor principal au plus égale à la vitesse de rotation de consigne (V1).

8. Procédé selon l'une quelconque des revendications 1 à 6,
**caractérisé en ce que** ladite augmentation progressive en puissance (A) est provoquée par l'émission d'une deuxième requête relative à une vitesse de rotation prédéfinie (V2) d'entraînement du rotor principal, la valeur de la vitesse de rotation prédéfinie (V2) étant inférieure à la valeur de la vitesse de rotation de consigne (V1) et étant supérieure à la valeur du seuil (S) de vitesse de rotation prédéterminé.

9. Procédé selon l'une quelconque des revendications 1 à 8,
**caractérisé en ce que** le procédé comprend une opération d'affichage d'au moins :
- une première information relative à la vitesse de rotation courante (NR) d'entraînement du rotor principal,
- une deuxième information relative à un franchissement de la valeur de la première consigne (OEI/2).

## Patentansprüche

1. Verfahren zum Antreiben mindestens eines Hauptrotors eines Drehflügelflugzeugs mit einem Antriebsaggregat, welches eine Mehrzahl von Motoren aufweist, zu einer Drehbewegung, wobei das Verfahren einen Flugsimulationsmodus für den Fall eines Ausfalls eines der Motoren des Drehflügelflugzeugs ausführt, um einen Piloten des Drehflügelflugzeugs für einen solchen Fall eines Ausfalls zu trainieren, wobei gemäß diesem Simulationsmodus:
- mindestens zwei Motoren gemeinsam eine Leistung liefern, die einen Antrieb des Hauptrotors mit einer Soll-Drehgeschwindigkeit (V1) bereitstellt, wobei die Leistung ausgeglichen zwischen den Motoren verteilt ist, die zusammen synchron mit einer Kraftübertragungskette in Eingriff stehen, die zwischen dem Antriebsaggregat und dem Hauptrotor angeordnet ist,
- die mindestens zwei Motoren jeweils in Abhängigkeit von einem ersten Sollwert (OEI/2) betrieben werden, wobei der Sollwert gemäß dem Wert eines zweiten von einem Trainer aus mehreren zweiten Sollwerten (OEI) ausgewählten Sollwert (OEI) vordefiniert ist, die jeweils für eine gegebene Periode eine Leistung definieren, die die Motoren außerhalb des Simulationsmodus im Fall eines realen Ausfalls eines Motors liefern dürfen, wobei der Wert des ersten Sollwerts (OEI/2) dem Wert des zweiten Sollwerts (OEI) entspricht, der die Leistung definiert, die gleichmäßig zwischen den Motoren verteilt ist, die zusammen synchron in Eingriff mit der Leistungsübertragungskette stehen, um den Hauptrotor im Simulationsmodus anzutreiben,
- eine aktuelle Drehgeschwindigkeit (NR) des Hauptrotors, die als kleiner als ein vorbestimmter Drehgeschwindigkeits-Schwellenwert (S) erfasst wurde, spontan die Zufuhr der von den Motoren innerhalb der durch einen dritten Sollwert vorgegebenen Grenze gelieferten Energie verursacht,
**dadurch gekennzeichnet, dass** die Leistungszufuhr ausgeführt wird durch ein aktives Beibehalten des Simulationsmodus und durch die Erzeugung eines Regelbefehls, der eine kontrollierte fortschreitende Erhöhung (A) der von den Motoren gelieferten Leistung verursacht, indem ein Überschreiten des von dem ersten Sollwert erzwungenen Grenzwerts erlaubt wird, wobei die fortschreitende Erhöhung (A) der Leistung unterbrochen wird bei einer aktuellen Leistung, die von den Motoren geliefert wird, die einen Antrieb des Hauptrotors auf eine Drehgeschwindigkeit bewirken, die größer oder gleich dem vorbestimmten Drehgeschwindigkeits-Schwellenwert (S) ist als Folge einer Betätigung des kollektiven Anstellwinkels der Rotorblätter des Hauptrotors, die durch den Piloten ausgeführt wird, der sein Training im Simulationsmodus durchführt.

2. Verfahren nach Anspruch 1,
dadurch gekenntzeichnet, dass für einen beliebigen im Simulationsmodus eingesetzten ersten Schwellenwert (OEI/2) der Wert des dritten Sollwerts der Wert eines beliebigen zweiten Sollwerts (OEI) ist.

3. Verfahren nach Anspruch 2,
**dadurch gekennzeichnet, dass** für einen beliebigen im Simulationsmodus eingesetzten ersten Sollwert (OEI/2) der Wert des dritten Sollwerts der Wert des zweiten Sollwerts (OEI) ist, der den Wert des im Simulationsmodus eingesetzten ersten Sollwerts (OEI/2) definiert.

4. Verfahren nach Anspruch 2,
**dadurch gekennzeichnet, dass** die aktuelle Leistung nach der Unterbrechung der fortschreitenden Erhöhung (A) der Leistung gehalten wird.

5. Verfahren nach einem der Ansprüche 1 bis 4,
**dadurch gekennzeichnet, dass** die fortschreitende Erhöhung (A) der Leistung herbeigeführt wird durch eine lineare Leistungsänderung.

6. Verfahren nach einem der Ansprüche 1 bis 4,
**dadurch gekennzeichnet, dass** die fortschreitende Erhöhung (A) der Leistung hervorgerufen wird durch eine fortschreitende Änderung der Erhöhung der Leistung.

7. Verfahren nach einem der Ansprüche 1 bis 6,
**dadurch gekennzeichnet, dass** die fortschreitende Erhöhung (A) der Leistung hervorgerufen wird durch die Aussendung einer ersten Anfrage bezüglich einer fortschreitenden Erhöhung des ersten Sollwerts (OEI/2) bis zum Erreichen einer Drehgeschwindigkeit des mindestens einen Hauptrotors, die höchstens gleich dem Sollwert (V1) der Rotationsgeschwindigkeit ist.

8. Verfahren nach einem der Ansprüche 1 bis 6,
**dadurch gekennzeichnet, dass** die fortschreitende Erhöhung (A) der Leistung hervorgerufen wird durch die Aussendung einer zweiten Anfrage bezüglich einer vordefinierten Antriebsdrehgeschwindigkeit (V2) des Hauptrotors, wobei der vordefnierte Wert (V2) der Drehgeschwindigkeit kleiner ist als der Sollwert (V1) der Rotationsgeschwindigkeit und größer ist als der Sollwert (S) der vorbestimmten Drehgeschwindigkeit.

9. Verfahren nach einem der Ansprüche 1 bis 8,
**dadurch gekennzeichnet, dass** das Verfahren einen Anzeigevorgang beinhaltet, von mindestens:
- einer ersten Information bezüglich der aktuellen Antriebsdrehgeschwindigkeit (NR) des Hauptrotors,
- einer zweiten Information bezüglich des Erreichens des Wertes des ersten Sollwerts (OEI/2).

## Claims

1. Method of driving in rotation at least one main rotor of a rotorcraft fitted with a power plant comprising a plurality of engines, the method implementing an in-flight simulation mode that simulates failure of one of the engines of the rotorcraft in order to train a pilot of the rotorcraft for such a failure, in which simulation mode:
- at least two engines jointly deliver a power in order to drive the main rotor at a setpoint speed of rotation (V1), said power being shared evenly between the engines which are kept as a whole in synchronous engagement on a power transmission train interposed between the power plant and the main rotor,
- each of said at least two engines being operated in dependence on a first setpoint (OEI/2) predefined according to the value of a second setpoint (OEI) selected by a trainer from a plurality of second setpoints (OEI), each defining for a given period a power that the engines are authorised to deliver when not in simulation mode in the event of a real failure of an engine, the value of the first setpoint (OEI/2) corresponding to the value of the second setpoint (OEI) defining it shared evenly between the engines which are kept as a whole in synchronous engagement on said power transmission train in order to drive the main rotor in rotation in simulation mode,
- a current speed of rotation (NR) of the main rotor detected as lower than a predetermined threshold speed of rotation (S), spontaneously giving rise to the performance of an operation of supplying power delivered by the engines within the limit imposed by a third setpoint,
**characterised in that** said operation of supplying power is performed by actively maintaining the simulation mode and by generating a regulation command giving rise to a controlled gradual increase (A) of the power delivered by the engines by authorising the limit imposed by the first setpoint (OEI/2) to be exceeded, said gradual power increase (A) being interrupted at a current power delivered by the engines driving the main rotor at a speed of rotation greater than or equal to the predetermined threshold speed of rotation (S) as a consequence of a collective pitch manoeuvre of the blades of the main rotor carried out by the pilot continuing training in simulation mode.

2. Method according to claim 1,
**characterised in that**, for any one said first setpoint (OEI/2) implemented in simulation mode, the value of the third setpoint is the value of any one of the second setpoints (OEI).

3. Method according to claim 2,
**characterised in that**, for any one said first setpoint (OEI/2) implemented in simulation mode, the value of the third setpoint is the value of the second setpoint (OEI) defining the value of the first setpoint (OEI/2) implemented in simulation mode.

4. Method according to claim 3,
**characterised in that** said current power is maintained after said interruption of gradual power increase (A).

5. Method according to any one of claims 1 to 4,
**characterised in that** said gradual power increase (A) is brought about according to a linear power variation.

6. Method according any one of claims 1 to 4,
**characterised in that** said gradual power increase (A) is brought about according to a gradual variation of the power increase.

7. Method according any one of claims 1 to 6,
**characterised in that** said gradual power increase (A) is brought about by issuing a first request relating to a gradual increase of the first setpoint (OEI/2) until said at least one main rotor reaches a speed of rotation not greater than the setpoint speed of rotation (V1).

8. Method according to any one of claims 1 to 6,
**characterised in that** said gradual power increase (A) is brought about by issuing a second request relating to a predefined speed of rotation (V2) for driving the main rotor, the value of the predefined speed of rotation (V2) being less than the value of the setpoint speed of rotation (V1) and being greater than the value of the predetermined threshold speed of rotation (S).

9. Method according to any one of claims 1 to 8,
**characterised in that** the method comprises an operation of displaying at least:
- a first piece of information relating to the current speed of rotation (NR) for driving the main rotor,
- a second piece of information relating to an exceeding the value of the first setpoint (OEI/2).
